# EUROPEAN PATENT APPLICATION

(11) **EP 3 804 842 A1**
(43) Date of publication of application: **14.04.2021**
(21) Application number: 18921341.6
(22) Date of filing: 18.06.2018
(51) Int. Cl.: B01D 63/02, H01M 8/04119

(54) **METHOD FOR MANUFACTURING HOLLOW FIBER MEMBRANE MODULE AND HOLLOW FIBER MEMBRANE MODULE MANUFACTURED BY SAME**

(30) Priority: 08.06.2018 KR 20180066392
(71) Applicant: Kolon Industries, Inc., Seoul 07793 (KR)
(72) Inventor: AHN, Woong-Jeon, Seoul 07793 (KR); OH, Young-Seok, Seoul 07793 (KR); KIM, Kyoung-Ju, Seoul 07793 (KR)
(74) Representative: Ter Meer Steinmeister & Partner
(86) International application number: PCT/KR2018/006843
(87) International publication number: WO 2019/235676

(57) **Abstract**

The present invention relates to a method for manufacturing a hollow fiber membrane module by using an open hollow fiber membrane cartridge, and a hollow fiber membrane module manufactured by same, the method for manufacturing a hollow fiber membrane module according to an embodiment of the present invention comprising the steps of: preparing a hollow fiber membrane cartridge; opening the hollow fiber membrane cartridge; arranging a hollow fiber membrane on the opened hollow fiber membrane cartridge; and closing the hollow fiber membrane cartridge on which the hollow fiber membrane is arranged.

## Description

### [TECHNICAL FIELD]

The present disclosure relates to a method of manufacturing a hollow fiber membrane module using an openable hollow fiber membrane cartridge and a hollow fiber membrane module manufactured by the same.

### [Background Art]

A fuel cell is a power generation cell that combines hydrogen and oxygen to generate electricity. Such a fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the volume of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may be generally classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC) .

These fuel cells are operated fundamentally by the same principle, but are different from each other in terms of the kind of fuel that is used, operating temperature, catalyst, and electrolyte. Among these fuel cells, the polymer electrolyte membrane fuel cell is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors to improve the performance of the polymer electrolyte membrane fuel cell is to supply a predetermined amount or more of moisture to a polymer electrolyte membrane (PEM) (also referred to as a proton exchange membrane) of a membrane electrode assembly (MEA) in order to retain water content. The reason for this is that, in the case in which the polymer electrolyte membrane becomes dry, power generation efficiency is abruptly reduced.

1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a humidification membrane method of supplying moisture to a gas fluid bed using a polymer separation membrane are used as methods of humidifying the polymer electrolyte membrane.

Among these methods, the humidification membrane method, which provides water vapor to a gas that is supplied to the polymer electrolyte membrane using a membrane configured to selectively transmit only water vapor included in an exhaust gas in order to humidify the polymer electrolyte membrane, is advantageous in that it is possible to reduce the weight and size of a humidifier.

In the case in which a module is formed, a hollow fiber membrane having large transmission area per unit volume is preferably used as the selective transmission membrane used in the humidification membrane method. That is, in the case in which a membrane humidifier is manufactured using a hollow fiber membrane, high integration of the hollow fiber membranes having large contact surface area is possible, whereby it is possible to sufficiently humidify a fuel cell even in the case of a small capacity, it is possible to use a low-priced material, and it is possible to collect moisture and heat included in a non-reaction gas discharged from the fuel cell at a high temperature and to reuse the collected moisture and heat through the humidifier.

In the case of the humidifier using the hollow fiber membrane, however, a plurality of hollow fiber membranes is integrated in order to increase the capacity of the humidifier. In this case, the flow of a gas that flows outside the hollow fiber membranes is not uniform in the entirety of the humidifier due to resistance caused by the highly integrated hollow fiber membranes.

In order to solve this, a hollow fiber membrane module is configured to have a plurality of cartridges, which is mounted in a membrane humidifier housing in order to achieve uniform flow of a gas. That is, a hollow fiber membrane bundle is housed in each cartridge, and a plurality of cartridges is mounted in the membrane humidifier housing such that a gas introduced into the membrane humidifier housing flows in the cartridges, whereby the flow of the gas is uniform.

However, a conventional cartridge system has the following problems in manufacture.

The conventional cartridge system uses a closed type cartridge that is open at the upper and lower surfaces thereof and is closed at the side surface thereof. Consequently, hollow fiber membranes in a dry state must be inserted into the cartridge in a longitudinal direction of the cartridge in the state in which the cartridge is stood on end. In the case in which hollow fiber membranes in a dry state are inserted into the cartridge, the hollow fiber membranes are bent during insertion thereof.

In a process of inserting a plurality of hollow fiber membranes in a dry state into the cartridge, hollow fiber membranes are damaged due to various causes, such as friction between hollow fiber membranes that have already been inserted and hollow fiber membranes that are being inserted or disturbance occurring during insertion of hollow fiber membranes.

Also, in order to insert hollow fiber membranes in a dry state into the cartridge without damage thereto, the hollow fiber membranes must be inserted somewhat sparsely, whereby the packing density (PD) of the hollow fiber membranes is reduced.

Also, in order to insert hollow fiber membranes into the cartridge without damage thereto, it is necessary for a worker to carefully insert the hollow fiber membranes into the cartridge, which leads to an increase in process time and manpower requirement.

### [Disclosure]

### [Technical Problem]

The present disclosure has been made in view of the above problems, and it is an object of the present disclosure to provide a method of manufacturing a hollow fiber membrane module capable of preventing damage to a hollow fiber membrane bundle and a decrease in packing density of the hollow fiber membrane bundle caused in a process of inserting the hollow fiber membrane bundle into a cartridge and capable of reducing process time and manpower requirement and a hollow fiber membrane module manufactured by the same.

### [Technical Solution]

A method of manufacturing a hollow fiber membrane module according to an embodiment of the present disclosure includes:

preparing a hollow fiber membrane cartridge; opening the hollow fiber membrane cartridge; disposing hollow fiber membranes in the opened hollow fiber membrane cartridge; and closing the hollow fiber membrane cartridge having the hollow fiber membranes disposed therein.

In the method of manufacturing the hollow fiber membrane module according to the embodiment of the present disclosure, the hollow fiber membrane cartridge may include a body unit having a mesh unit formed at each of the upper part and the lower part thereof and a locking unit configured to fasten the body unit in a hinged fashion.

In the method of manufacturing the hollow fiber membrane module according to the embodiment of the present disclosure, the locking unit may include a locking cover formed at one side of the body unit and a locking protrusion formed at the other side of the body unit so as to protrude therefrom.

In the method of manufacturing the hollow fiber membrane module according to the embodiment of the present disclosure, the locking unit may include a locking cover configured to open the entire surface of one side of the body unit and a locking protrusion formed on the body unit so as to protrude therefrom.

In the method of manufacturing the hollow fiber membrane module according to the embodiment of the present disclosure, the lower surface of the body unit, both side surfaces of the body unit, and the lower side of the upper surface of the body unit may be integrally formed, and
the upper side of the upper surface of the body unit may be capable of being separated from one of the side surfaces of the body unit so as open the body unit in one direction.

In the method of manufacturing the hollow fiber membrane module according to the embodiment of the present disclosure, the hollow fiber membrane cartridge may include a body unit having a mesh unit formed at each of the upper part and the lower part thereof and a locking unit configured to fasten the body unit in a sliding fashion.

In the method of manufacturing the hollow fiber membrane module according to the embodiment of the present disclosure, the locking unit may include a locking cover configured to slide along one side of the body unit in order to open or close the body unit and a sliding groove formed at the one side of the body unit such that the locking cover can slide along the sliding groove.

In the method of manufacturing the hollow fiber membrane module according to the embodiment of the present disclosure, the body unit may be formed so as to be dividable into an upper surface and a lower surface, one of the upper surface and the lower surface of the body unit may be a locking cover configured to slide along the other surface in order to open or close the body unit, and

the other surface may be provided with a sliding groove configured to allow the locking cover to slide therealong.

In the method of manufacturing the hollow fiber membrane module according to the embodiment of the present disclosure, the lower surface of the body unit, both side surfaces of the body unit, and the lower side of the upper surface of the body unit may be integrally formed, the upper side of the upper surface of the body unit may be formed so as to be capable of being separated from the side surfaces of the body unit, the upper side of the upper surface of the body unit may be a locking cover configured to slide in order to open or close the body unit, and the lower surface of the body unit may be provided with a sliding groove configured to allow the upper side of the upper surface to slide therealong.

In the method of manufacturing the hollow fiber membrane module according to the embodiment of the present disclosure, the mesh unit may include a plurality of ribs configured to guide the flow direction of a fluid and a window formed so as to be surrounded by the plurality of ribs, wherein the corner curvature of each of the ribs may be 0.7 or more.

A hollow fiber membrane module according to an embodiment of the present disclosure includes:
a housing unit including a first fluid inlet, a first fluid outlet, a second fluid inlet, and a second fluid outlet; and at least one openable cartridge installed in the housing unit, the openable cartridge having a plurality of hollow fiber membranes housed therein.

In the hollow fiber membrane module according to the embodiment of the present disclosure, the hollow fiber membrane cartridge may include a body unit having a mesh unit formed at each of the upper part and the lower part thereof and a locking unit configured to fasten the body unit in a hinged fashion.

In the hollow fiber membrane module according to the embodiment of the present disclosure, the locking unit may include a locking cover formed at one side of the body unit and a locking protrusion formed at the other side of the body unit so as to protrude therefrom.

In the hollow fiber membrane module according to the embodiment of the present disclosure, the locking unit may include a locking cover configured to open the entire surface of one side of the body unit and a locking protrusion formed on the body unit so as to protrude therefrom.

In the hollow fiber membrane module according to the embodiment of the present disclosure, the lower surface of the body unit, both side surfaces of the body unit, and the lower side of the upper surface of the body unit may be integrally formed, and the upper side of the upper surface of the body unit may be capable of being separated from one of the side surfaces of the body unit so as to open the body unit in one direction.

In the hollow fiber membrane module according to the embodiment of the present disclosure, the hollow fiber membrane cartridge may include a body unit having a mesh unit formed at each of the upper part and the lower part thereof and a locking unit configured to fasten the body unit in a sliding fashion.

In the hollow fiber membrane module according to the embodiment of the present disclosure, the locking unit may include a locking cover configured to slide along one side of the body unit in order to open or close the body unit and a sliding groove formed at the one side of the body unit such that the locking cover can slide along the sliding groove.

In the hollow fiber membrane module according to the embodiment of the present disclosure, the body unit may be formed so as to be dividable into an upper surface and a lower surface, one of the upper surface and the lower surface of the body unit may be a locking cover configured to slide along the other surface in order to open or close the body unit, and the other surface may be provided with a sliding groove configured to allow the locking cover to slide therealong.

In the hollow fiber membrane module according to the embodiment of the present disclosure, the lower surface of the body unit, both side surfaces of the body unit, and the lower side of the upper surface of the body unit may be integrally formed, the upper side of the upper surface of the body unit may be formed so as to be capable of being separated from the side surfaces of the body unit, the upper side of the upper surface of the body unit may be a locking cover configured to slide in order to open or close the body unit, and the lower surface of the body unit may be provided with a sliding groove configured to allow the upper side of the upper surface to slide therealong.

In the hollow fiber membrane module according to the embodiment of the present disclosure, the mesh unit may include a plurality of ribs configured to guide the flow direction of a fluid and a window formed so as to be surrounded by the plurality of ribs, wherein the corner curvature of each of the ribs may be 0.7 or more.

The details of other embodiments according to various aspects of the present disclosure are included in the following detailed description of the present disclosure.

### [Advantageous effects]

According to embodiments of the present disclosure, hollow fiber membranes are disposed in the state in which a cartridge is open, whereby it is possible to prevent damage to hollow fiber membranes caused when the hollow fiber membranes are inserted into the cartridge as in the conventional art.

In addition, since there is no concern of hollow fiber membranes being damaged during disposition thereof, it is possible to dispose hollow fiber membranes in the cartridge at higher density than in the conventional art, whereby it is possible to increase packing density (PD) of a hollow fiber membrane bundle.

In addition, it is sufficient to appropriately dispose the hollow fiber membranes in the opened cartridge, whereby it is possible to reduce worker labor more than in the case in which the hollow fiber membranes are inserted into a closed type cartridge, and therefore it is possible to reduce process time and manpower requirement.

Also, in a conventional hollow fiber membrane insertion process, dried hollow fiber membranes must be used in order to insert hollow fiber membranes into a closed type cartridge. In the present disclosure, however, hollow fiber membranes are not inserted into the cartridge but are disposed in the cartridge in an open state. Consequently, it is possible to dispose not only hollow fiber membranes in a wet state but also hollow fiber membranes in a dry state in the cartridge.

In addition, conventionally, a separate mesh net is necessary to prevent the hollow fiber membranes from being cut. In the cartridge according to the present disclosure, however, a mesh unit is included, whereby it is possible to prevent the hollow fiber membranes from being cut, and therefore no separate mesh net is necessary.

### [Description of Drawings]

FIG. 1 is a flowchart showing a method of manufacturing a hollow fiber membrane module according to an embodiment of the present disclosure.
FIG. 2 is a perspective view showing an example of an openable hollow fiber membrane cartridge used in the method of manufacturing the hollow fiber membrane module according to the embodiment of the present disclosure.
FIG. 3 is a plan view showing the state in which the openable hollow fiber membrane cartridge of FIG. 2 is open (unfolded).
FIGS. 4 to 9 are perspective views showing various embodiments of the openable hollow fiber membrane cartridge.
FIG. 10 is a sectional view taken along line A-A' of FIG. 2, showing the flow direction of a fluid that is introduced through a mesh unit.
FIG. 11 is an exploded perspective view showing a hollow fiber membrane module according to an embodiment of the present disclosure.

### [Best Mode]

The present disclosure may be changed in various manners and may have various embodiments, wherein specific embodiments will be illustrated and described in detail in the following detailed description. However, the present disclosure is not limited to the specific embodiments, and it should be understood that the present disclosure includes all modifications, equivalents, or substitutions included in the idea and technical scope of the present disclosure.

The terms used in the present disclosure are provided only to describe the specific embodiments, and do not limit the present disclosure. Singular forms are intended to include plural forms as well, unless the context clearly indicates otherwise. In the present disclosure, it should be understood that the terms "includes," "has," etc. specify the presence of features, numbers, steps, operations, elements, components, or combinations thereof described in the specification, but do not preclude the presence or addition of one or more other features, numbers, steps, operations, elements, components, or combinations thereof. Hereinafter, fuel cell membrane humidifiers according to embodiments of the present disclosure will be described with reference to the accompanying drawings.

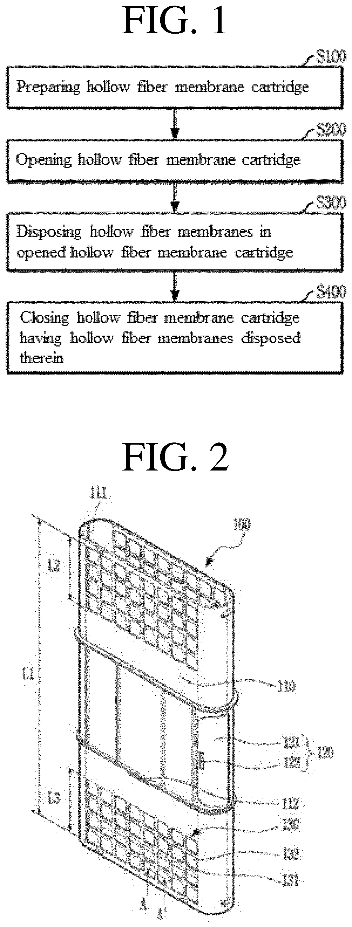

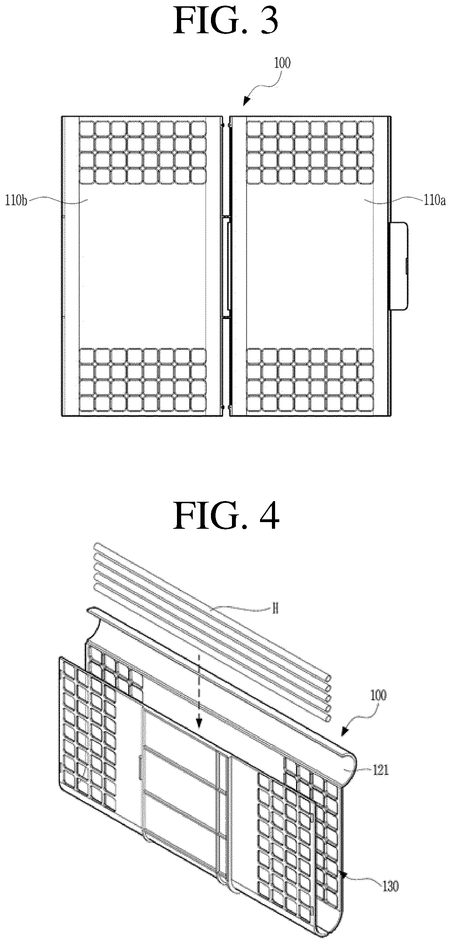

FIG. 1 is a flowchart showing a method of manufacturing a hollow fiber membrane module according to an embodiment of the present disclosure, FIG. 2 is a perspective view showing an example of an openable hollow fiber membrane cartridge used in the method of manufacturing the hollow fiber membrane module according to the embodiment of the present disclosure, FIG. 3 is a plan view showing the state in which the openable hollow fiber membrane cartridge of FIG. 2 is open (unfolded). FIGS. 4 to 9 are perspective views showing various embodiments of the openable hollow fiber membrane cartridge.

As shown in FIG. 1, the method of manufacturing the hollow fiber membrane module according to the embodiment of the present disclosure includes a step of preparing a hollow fiber membrane cartridge (S100), a step of opening the hollow fiber membrane cartridge (S200), a step of disposing hollow fiber membranes in the opened hollow fiber membrane cartridge (S300), and a step of closing the hollow fiber membrane cartridge having the hollow fiber membranes disposed therein (S400).

First, the hollow fiber membrane cartridge is prepared (S100).

The hollow fiber membrane cartridge used in the present disclosure is an openable hollow fiber membrane cartridge 100 (hereinafter referred to as a "cartridge") shown in each of FIGS. 2 to 9. The cartridge 100 includes a body unit 110 having a mesh unit 130 formed at each of the upper and lower parts thereof and a locking unit 120 configured to fasten the body unit 110.

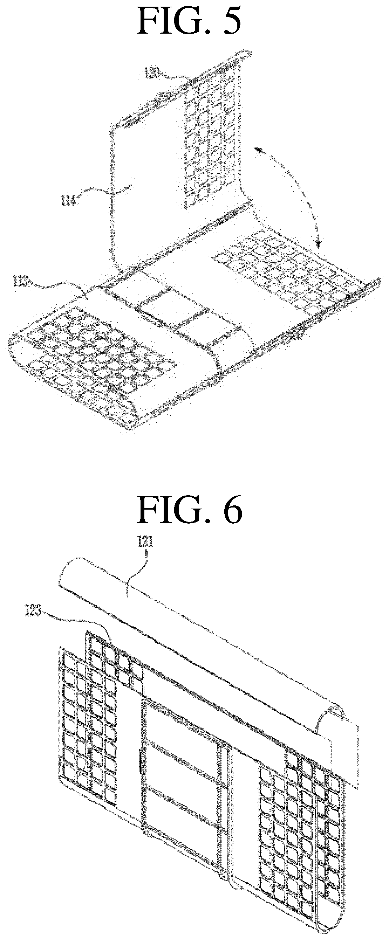

In the cartridge 100 shown in each of FIGS. 2 to 5, a hinge type locking unit 120 fastens the body unit 110. In the cartridge 100 shown in each of FIGS. 6 to 9, at least a portion of the body unit 110 is capable of being separated, and a sliding type locking unit 120 couples and fastens the body unit 110.

First, the cartridge including the hinge type locking unit 120 will be described with reference to FIGS. 2 to 5.

Referring to FIGS. 2 and 3, the body unit 110 may be formed in a rectangular parallelepiped shape rounded at both side surfaces thereof, a cylindrical shape having a circular section, or an oval cylindrical shape having an oval section. This is only an illustration of the shape of the body unit 110, and the present disclosure is not limited thereto.

The body unit 110 is preferably made of a material that has high dimensional stability, high resin flowability, and high resistance to thermal deformation. Examples of such a material include polycarbonate (PC), acrylonitrile butadiene styrene (ABS), and nylon. The body unit 110 includes a folding portion 111 configured to allow the cartridge 100 to be unfolded when the state in which the body unit 110 is locked by the locking unit 120 is released. The folding portion 111 is a groove formed inside the body unit 110. For example, the folding portion 111 may be a V-shaped groove or a U-shaped groove.

The body unit 110 includes a separation-preventing hook 112 configured to prevent the cartridge 100 from being separated from a housing unit 200 (see FIG. 12) when the cartridge 100 is inserted into the housing unit 200. The separation-preventing hook 112 may be formed in the shape of a protrusion formed on at least one of the upper surface or the lower surface of the body unit 110 so as to protrude a predetermined length therefrom.

The locking unit 120 may be formed at one side surface of the body unit 110. The locking unit 120 includes a locking cover 121 connected to one side of the body unit 110 and a locking protrusion 122 formed at the other side of the body unit 110 so as to protrude therefrom. However, the present disclosure is not limited thereto. The locking unit 120 may include a locking protrusion (not shown) formed on the locking cover 121 and a locking recess (not shown) formed in the body unit such that the locking protrusion is inserted into the locking recess.

As shown in FIG. 4, the locking unit 120 may be configured to open the entire surface of one side of the body unit 110. In this case, the locking unit 120 includes a locking cover 121 configured to open or close the entire surface of one side of the body unit 110 and a locking protrusion 122 formed on the body unit 110 so as to protrude therefrom. In this case, it is not necessary to form the folding portion 111 at the body unit 110, whereby it is possible to improve durability of the cartridge 100.

As shown in FIG. 5, the locking unit 120 may be configured to open a portion of the upper surface of the body unit 110 in one direction. In this case, the lower surface and both side surfaces of the body unit 110 are integrally formed, the lower side 113 of the upper surface is formed integrally with the side surfaces of the body unit 110, and the upper side 114 of the upper surface of the body unit is capable of being separated from one of the side surfaces of the body unit 110 so as to open the body unit in one direction in a hinged fashion. That is, the upper side 114 of the upper surface of the body unit 110 is formed so as to be rotatable with a predetermined angle about the other side surface of the body unit 110 as an axis. In this case, the upper side 114 of the upper surface of the body unit 110 may perform the function of a locking cover, a locking protrusion (not shown) may be formed on the upper side 114 of the upper surface of the body unit 110, and a locking recess (not shown) may be formed in a portion corresponding thereto. Of course, a locking recess may be formed in the upper side 114 of the upper surface of the body unit 110, and a locking protrusion may be formed on a portion corresponding thereto.

Next, the cartridge including the sliding type locking unit 120 will be described with reference to FIGS. 6 to 9. As shown in FIGS. 6 to 9, the locking unit 120 may be configured to slide along at least a portion of the body unit 110.

In the cartridge 100 shown in FIG. 6, the locking unit 120 slides along one side of the body unit 110 in order to open or close the body unit 110. One side surface of the body 110 may be capable of being separated in order to form the locking unit 120. The locking unit 120 may include a locking cover 121 configured to slide along one side of the body unit 110 in an upward-downward direction in order to open or close the body unit 110 and a sliding groove 123 formed at the one side of the body unit such that the locking cover can slide along the sliding groove. As shown, the locking cover 121 may be formed in a curved shape. However, the present disclosure is not limited thereto. In this case, it is not necessary to form the folding portion 111 at the body unit 110, whereby it is possible to improve durability of the cartridge 100.

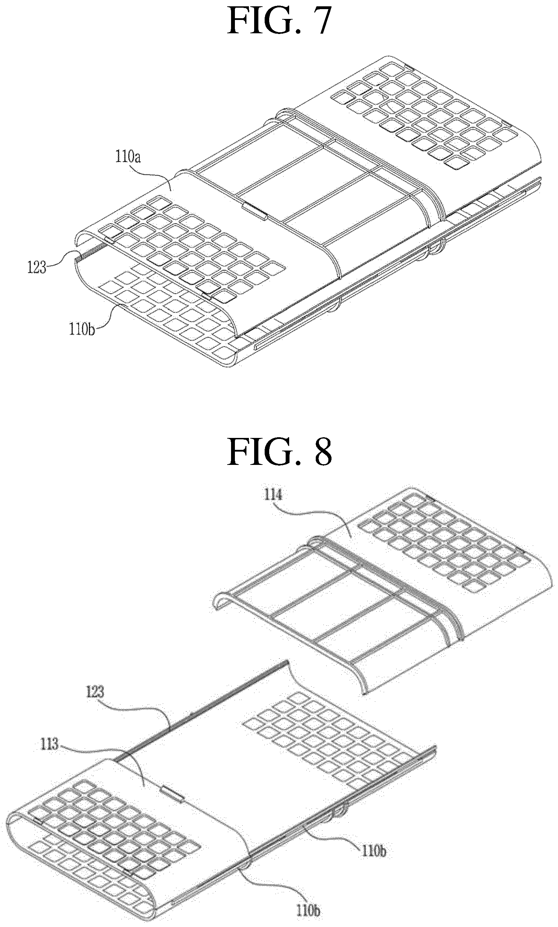

In the cartridge 100 shown in FIG. 7, the body unit 110 is formed so as to be dividable into an upper surface 110a and a lower surface 110b. At least one of the upper surface 110a or the lower surface 110b performs the function of a locking cover. For example, the upper surface 110a of the body unit 110 may be a locking cover. In this case, a sliding groove 123 may be formed in the lower surface 110b of the body unit 110 such that the upper surface 110a can slide along the sliding groove. At this time, the locking unit 120 may include the upper surface 110a of the body unit 110 and the sliding groove 123. Even in this case, it is not necessary to form the folding portion 111 at the body unit 110, whereby it is possible to improve durability of the cartridge 100. In particular, the cartridge 100 of FIG. 7 is useful when hollow fiber membranes in a wet state are inserted into the cartridge 100.

In the cartridge 100 shown in FIG. 8, the locking unit 120 is configured to open a portion of the upper surface of the body unit 110, in a similar manner to FIG. 5. The lower surface and both side surfaces of the body unit 110 are integrally formed, the lower side 113 of the upper surface of the body unit is formed integrally with the side surfaces of the body unit 110, and the upper side 114 of the upper surface is capable of being separated from the side surfaces of the body unit 110 so as to open the body unit in a sliding fashion. The upper side 114 of the upper surface may perform the function of a locking cover. A sliding groove 123 may be formed in a portion of the lower surface 110b of the body unit 110 such that the upper side 114 of the upper surface can slide along the sliding groove. At this time, the locking unit 120 may include the upper side 114 of the upper surface of the body unit and the sliding groove 123. Even in this case, it is not necessary to form the folding portion 111 at the body unit 110, whereby it is possible to improve durability of the cartridge 100.

In the case in which hollow fiber membranes in a dry state are inserted into the cartridge of FIG. 7, the hollow fiber membranes in the dry state are inserted in an amount equivalent to only about half the capacity of the cartridge when the hollow fiber membranes are inserted higher than the height of the lower surface 110b, since there is no structure capable of supporting the hollow fiber membranes. In the case in which hollow fiber membranes in a dry state are inserted into the cartridge of FIG. 8, on the other hand, it is possible to insert the hollow fiber membranes in the dry state in an amount equivalent to the capacity of the cartridge, since the lower side 113 of the upper surface integrally formed with the lower surface 110b serves as a structure capable of supporting the hollow fiber membranes in the dry state. Even in the case in which the cartridge of FIG. 7 is used, hollow fiber membranes in a wet state may be inserted into the cartridge in an amount equivalent to the capacity of the cartridge since the hollow fiber membranes in the wet state are united with each other due to moisture.

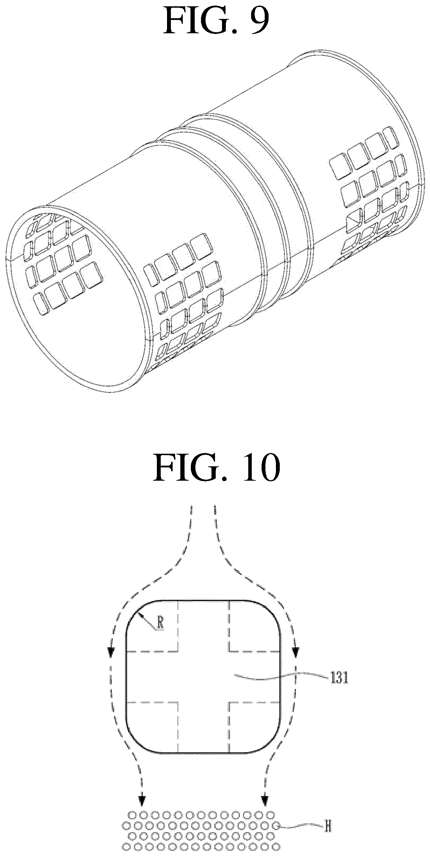

FIG. 9 exemplarily shows the case in which the body unit 110 of the cartridge 100 is generally formed in a cylindrical shape. Similarly to FIGS. 6 to 8, a portion of the cylinder may be capable of being separated in order to form a locking cover, half of the cylinder may be capable of being separated in order to form a locking cover, or a portion of the cylinder may be integrally formed while the remaining portion of the cylinder may be capable of being separated in order to form a locking cover, and a sliding groove may be formed at a position corresponding to the locking cover. The locking cover and the sliding groove may constitute a locking unit. However, this is merely one illustration, and the shape of the body unit 110 of the cartridge 100 is not limited thereto.

A mesh unit 130 is formed at each of the upper part and the lower part of the body unit 110. The mesh unit 130 allows a second fluid introduced through a second fluid inlet 231, a description of which will follow, to be introduced into the cartridge 100 through windows 132 such that moisture exchange is performed between the second fluid and a first fluid introduced through a first fluid inlet 221 in the cartridge 100. The mesh unit 130 may prevent a portion of the introduced second fluid from directly colliding with the hollow fiber membranes disposed in the cartridge 100, whereby it is possible to prevent damage to the hollow fiber membranes.

As shown in FIG. 10, each rib constituting the mesh unit 130 may guide the flow direction of the introduced second fluid, whereby it is possible to prevent damage to the hollow fiber membrane bundle located immediately below each rib 131. At this time, the extent to which the hollow fiber membrane bundle is damaged is changed depending on the corner curvature of each rib 131. Test results are shown in Table 1 below.

**[Table 1]**

| R | Number of cut fiber membranes |
|---|---|
| 0.3 | 23 of 1800 fiber membranes |
| 0.5 | 19 of 1800 fiber membranes |
| 0.7 | 8 of 1800 fiber membranes |
| 0.9 | None of 1800 fiber membranes |

Referring to Table 1 above, it is preferable that the corner curvature R of each rib 131 be 0.7 or more. In the case in which the corner curvature R is equal to or less than 0.5, 1% or more of the total number of hollow fiber membranes is cut, which may adversely affect overall humidification efficiency. In the case in which the corner curvature R is equal to or greater than 0.7, on the other hand, only a few of the hollow fiber membranes are cut, and therefore the effect thereof on overall humidification efficiency is insignificant.

The length L2+L3 of the mesh unit 130 is set so as to be equivalent to 10 to 70% of the overall length L1 of the cartridge, and the total area of the windows 132 formed so as to be surrounded by the ribs 131 is set so as to be equivalent to 30 to 70% of the overall area of the cartridge. In the case in which the total area of the windows 132 exceeds 70% of the overall area of the cartridge, the size of the space in which the second fluid introduced through the second fluid inlet 231 is capable of transferring moisture through the hollow fiber membranes is reduced, which adversely affects overall humidification efficiency.

Meanwhile, conventionally, a separate mesh net is necessary to prevent the hollow fiber membranes from being cut. In the cartridge 100 according to the present disclosure, however, the mesh unit 130 is included, whereby it is possible to prevent the hollow fiber membranes from being cut, and therefore no separate mesh net is necessary.

Subsequently, the cartridge 100 prepared as described above is opened (S200).

In the case of the cartridge including the hinge type locking unit, as shown in FIGS. 2 to 5, the locking unit 120 formed at the side surface of the body unit 110 is pulled to release the coupled state between the locking cover 121 and the locking protrusion 122 and thus to open the body unit 110.

In the case of the cartridge including the sliding type locking unit, as shown in FIGS. 6 to 9, the locking cover is slid in one direction to open the side surface of the body unit 110.

Subsequently, hollow fiber membranes are disposed in the cartridge 100 in the state in which the hollow fiber membrane cartridge 100 is open (S300). At this time, hollow fiber membranes in a dry state may be disposed. Alternatively, hollow fiber membranes in a wet state may be disposed.

Hollow fiber membranes are washed and are then sufficiently dried. The hollow fiber membranes in a dry state are disposed in the cartridge 100. The hollow fiber membranes are disposed in the right part of the body unit 110 (the part of the body unit at which the locking cover is formed) in an open state, shown in FIG. 3.

Meanwhile, in the case in which the locking unit 120 is configured to open the entire surface of one side of the body unit 110, as shown in FIG. 4, or in the case in which the locking unit 120 is configured to slide along one side of the body unit 110, as shown in FIG. 6, the entire surface of one side of the body unit 110 may be opened, the cartridge 100 may be positioned such that the opened entire surface of one side of the body unit 110 faces upwards, and hollow fiber membranes H may be inserted into the cartridge 100 such that the longitudinal direction of each of the hollow fiber membranes is parallel to the opened side of the body unit 110, whereby the hollow fiber membranes may be easily disposed in the cartridge 100.

Meanwhile, in the case in which the locking unit 120 is configured to open a portion of the upper surface of the body unit 110 in one direction, as shown in FIG. 5 or 8, the upper side 114 of the upper surface of the body unit 110 is opened, and hollow fiber membranes in a dry state or a wet state are disposed in the opened portion of the body unit.

Meanwhile, in the case in which the upper surface 110a of the body unit is slid so as open the body unit, as shown in FIG. 7, the upper surface 110a of the body unit is opened, and hollow fiber membranes in a wet state are disposed in the opened portion of the body unit.

According to various embodiments of the present disclosure, the hollow fiber membranes are disposed in the cartridge in the state in which the cartridge is open, and therefore damage to the hollow fiber membranes, which occurs when the hollow fiber membranes are inserted into a closed type cartridge, as in the conventional art, does not occur.

In addition, there is no concern of the hollow fiber membranes being damaged during disposition of the hollow fiber membranes. Consequently, it is possible to dispose the hollow fiber membranes in the cartridge at higher density than in the conventional art, whereby it is possible to improve packing density (PD) of the hollow fiber membrane bundle.

In addition, it is sufficient to appropriately dispose the hollow fiber membranes in the opened cartridge, whereby it is possible to reduce worker labor more than in the case in which the hollow fiber membranes are inserted into a closed type cartridge, and therefore it is possible to reduce process time and manpower requirement.

Meanwhile, in the case in which an openable cartridge is used, as in the present disclosure, hollow fiber membranes may be washed, and then the hollow fiber membranes in a wet state may be disposed in the cartridge 100 without being dried. That is, in a conventional hollow fiber membrane insertion process, dried hollow fiber membranes must be used in order to insert hollow fiber membranes into a closed type cartridge. In the present disclosure, however, hollow fiber membranes are not inserted into a cartridge but are disposed in the cartridge in an open state. Consequently, it is possible to dispose not only hollow fiber membranes in a wet state but also hollow fiber membranes in a dry state in the cartridge.

Subsequently, the hollow fiber membrane cartridge, in which the hollow fiber membranes are disposed, is closed (S400).

In the case of the cartridge including the hinge type locking unit, as shown in FIGS. 2 to 5, the locking cover 121 and the locking protrusion 122 are fastened to each other to close the cartridge.

In the case of the cartridge including the sliding type locking unit, as shown in FIGS. 6 to 9, the locking cover 121 is slid in the other direction to close the body unit 110.

After the cartridge is closed, the ends of the hollow fiber membranes are bound and potted. Gaps between the hollow fiber membranes are filled through a potting process.

Meanwhile, the potting process may be performed in the step of disposing the hollow fiber membranes in the cartridge (S300), although the potting process may be performed after the cartridge is closed. That is, a hollow fiber membrane bundle may be formed using a plurality of hollow fiber membranes, the ends of hollow fiber membrane bundles may be bound and potted, and the potted hollow fiber membrane bundles may be disposed in the cartridge.

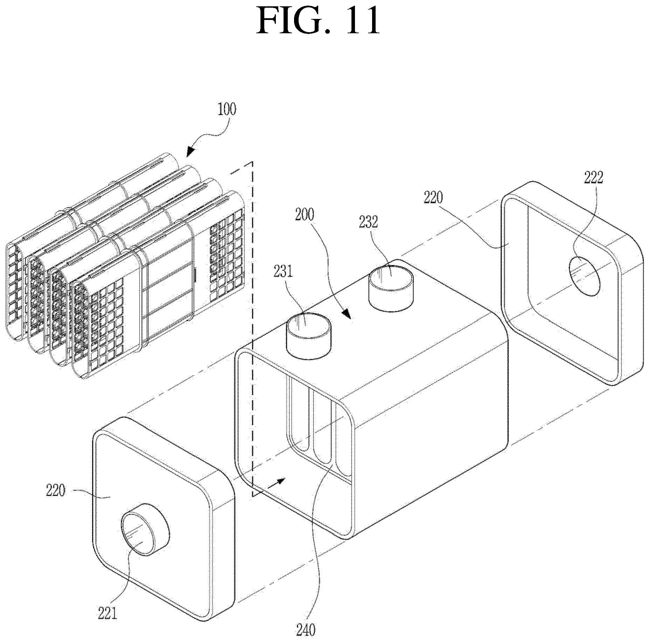

The hollow fiber membranes are disposed in the openable hollow fiber membrane cartridge and then the cartridge is closed through the above processes, whereby the cartridge 100 is manufactured. One or more cartridges 100 are manufactured and disposed in a housing unit 200, as shown in FIG. 11.

Hereinafter, a hollow fiber membrane module according to an embodiment of the present disclosure will be described with reference to FIG. 11. In the hollow fiber membrane module according to the embodiment of the present disclosure, at least one cartridge 100 is disposed in a housing unit 200, and hollow fiber membranes are housed in the cartridge. Here, the cartridge is manufactured using the above method, and includes a body unit 110 having a mesh unit 130 formed at each of the upper part and the lower part thereof and a locking unit 120 configured to lock the body unit 110.

As shown in FIG. 11, the hollow fiber membrane module according to the embodiment of the present disclosure includes a housing unit 200 and at least one cartridge 100 installed in the housing unit 200, the housing unit having a plurality of hollow fiber membranes housed therein.

The housing unit 200 defines the external appearance of the hollow fiber membrane module. The housing unit 200 may include a housing body 210 and housing caps 220, which may be integrally coupled to each other. Each of the housing body 210 and the housing caps 220 may be made of hard plastic, such as polypropylene 5 (PP5), polyphenylene sulfide (PPS), polyamide 6 (PA6), polyamide 66 (PA66), polyphthalamide (PPA), or polycarbonate, or metal.

In addition, the lateral sectional shape of each of the housing body 210 and the housing caps 220 may be a polygon or a circle. The polygon may be a rectangle, a square, a trapezoid, a parallelogram, a pentagon, or a hexagon, and corners of the polygon may be round. In addition, the circle may be an oval.

The housing body 210 is provided in both ends thereof with a second fluid inlet 231, through which a second fluid is introduced, and a second fluid outlet 232, through which the second fluid is discharged.

At least one cartridge 100, in which a plurality of hollow fiber membranes configured to allow moisture to selectively pass therethrough are housed, is disposed in the housing unit 200. Here, each of the hollow fiber membranes is made of a known material, and therefore a detailed description thereof will be omitted from this specification.

The cartridge 100 is provided at both ends thereof with potting units (not shown) configured to bind the hollow fiber membranes and to fill gaps between the hollow fiber membranes. As a result, the both ends of the cartridge 100 are blocked by the potting units, whereby a flow channel configured to allow the second fluid to pass therethrough is defined in the cartridge. Each of the potting units is made of a known material, and therefore a detailed description thereof will be omitted from this specification.

Meanwhile, the housing caps 220 are coupled to both ends of the housing body 210. A first fluid inlet 221 and a first fluid outlet 222 are formed in the housing caps 220. A first fluid introduced through the first fluid inlet 221 formed in one of the housing caps 220 is introduced into the cartridge, flows through an inner pipeline of each of the hollow fiber membranes, flows out of the cartridge, and is discharged outside through the first fluid outlet 222 formed in the other housing cap 220.

At least one insertion hole 240, in which the cartridge 100 can be mounted, is formed in the housing unit 200, and the cartridge 100 is inserted into the insertion hole 240. At this time, a protrusion of a separation-preventing hook 112 formed on the cartridge protrudes from the end of the insertion hole 240, whereby the mounting of the cartridge 100 is completed. The withdrawal of the cartridge from the insertion hole in the reverse direction is prevented by the protrusion of a separation-preventing hook 112, whereby it is possible to prevent the cartridge 100 mounted in the insertion hole 240 from being separated from the insertion hole in the reverse direction.

In the case in which it is necessary to withdraw the cartridge 100 from the insertion hole 240 for repair and washing, the cartridge 100 may be pushed in the direction opposite the insertion direction thereof in the state in which the protrusion is pushed with strong force, whereby the cartridge 100 may be withdrawn from the insertion hole.

Hereinafter, a process of moisture exchange between the first fluid and the second fluid in the hollow fiber membrane module constructed as described above will be described. In the following description, the first fluid may be a low-humidity fluid, and the second fluid may be a high-humidity fluid. Alternatively, the second fluid may be a low-humidity fluid, and the first fluid may be a high-humidity fluid.

The first fluid is introduced into the housing unit 200 and the cartridge 100 through the first fluid inlet 221 formed in one of the housing caps 220, flows in the hollow fiber membranes, and is discharged out of the hollow fiber membrane module through the first fluid outlet 222 formed in the other housing cap 220. Meanwhile, the first fluid may be introduced through the first fluid outlet 222 and may then flow in the direction in which the first fluid is discharged through the first fluid inlet 221.

The second fluid is introduced into the housing body 210 through the second fluid inlet 231 of the housing body 210, flows outside the hollow fiber membranes through a mesh unit 130a of the cartridge 100, flows into the housing body 210 through a mesh unit 130b of the cartridge 100, and is discharged outside through the second fluid outlet 232 of the housing body 210.

Meanwhile, the second fluid may be introduced through the second fluid outlet 232 and may then flow in the direction in which the second fluid is discharged through the second fluid inlet 231. That is, the first fluid and the second fluid may flow in opposite directions, or may flow in the same direction.

The first fluid and the second fluid flow inside and outside the hollow fiber membranes, and exchange a substance, such as moisture, or heat with each other through the hollow fiber membranes.

Although embodiments of the present disclosure have been described above, it will be apparent to a person having ordinary skill in the art to which the present disclosure pertains that the present disclosure can be variously modified and altered through addition, change, deletion, or supplement of components without departing from the idea of the present disclosure recited in the following claims and that such modifications and alterations fall within the scope of right of the present disclosure.

### [Description of Reference Numerals]

| | | | |
|---|---|---|---|
| 100: | Hollow fiber membrane cartridge | 110: | Body unit |
| 120: | Locking unit | 130: | Mesh unit |
| 200: | Housing unit | 210: | Housing body |
| 220: | Housing cap | 240: | Insertion hole |

## Claims

1. A method of manufacturing a hollow fiber membrane module, the method comprising:
preparing a hollow fiber membrane cartridge;
opening the hollow fiber membrane cartridge;
disposing hollow fiber membranes in the opened hollow fiber membrane cartridge; and
closing the hollow fiber membrane cartridge having the hollow fiber membranes disposed therein.

2. The method according to claim 1, wherein the hollow fiber membrane cartridge comprises:
a body unit having a mesh unit formed at each of an upper part and a lower part thereof; and
a locking unit configured to fasten the body unit in a hinged fashion.

3. The method according to claim 2, wherein the locking unit comprises:
a locking cover formed at one side of the body unit; and
a locking protrusion formed at the other side of the body unit so as to protrude therefrom.

4. The method according to claim 2, wherein the locking unit comprises:
a locking cover configured to open an entire surface of one side of the body unit; and
a locking protrusion formed on the body unit so as to protrude therefrom.

5. The method according to claim 2, wherein,
a lower surface of the body unit, both side surfaces of the body unit, and a lower side of an upper surface of the body unit are integrally formed, and
an upper side of the upper surface of the body unit is capable of being separated from one of the side surfaces of the body unit so as open the body unit in one direction.

6. The method according to claim 1, wherein the hollow fiber membrane cartridge comprises:
a body unit having a mesh unit formed at each of an upper part and a lower part thereof; and
a locking unit configured to fasten the body unit in a sliding fashion.

7. The method according to claim 6, wherein the locking unit comprises:
a locking cover configured to slide along one side of the body unit in order to open or close the body unit; and
a sliding groove formed at the one side of the body unit such that the locking cover can slide along the sliding groove.

8. The method according to claim 6, wherein,
the body unit is formed so as to be dividable into an upper surface and a lower surface,
one of the upper surface and the lower surface of the body unit is a locking cover configured to slide along the other surface in order to open or close the body unit, and
the other surface is provided with a sliding groove configured to allow the locking cover to slide therealong.

9. The method according to claim 6, wherein,
a lower surface of the body unit, both side surfaces of the body unit, and a lower side of an upper surface of the body unit are integrally formed,
an upper side of the upper surface of the body unit is formed so as to be capable of being separated from the side surfaces of the body unit,
the upper side of the upper surface of the body unit is a locking cover configured to slide in order to open or close the body unit, and
the lower surface of the body unit is provided with a sliding groove configured to allow the upper side of the upper surface to slide therealong.

10. The method according to any one of claims 2 to 9, wherein the mesh unit comprises:
a plurality of ribs configured to guide a flow direction of a fluid; and
a window formed so as to be surrounded by the plurality of ribs, and
wherein a corner curvature of each of the ribs is 0.7 or more.

11. A hollow fiber membrane module comprising:
a housing unit comprising a first fluid inlet, a first fluid outlet, a second fluid inlet, and a second fluid outlet; and
at least one openable cartridge installed in the housing unit, the openable cartridge having a plurality of hollow fiber membranes housed therein.

12. The hollow fiber membrane module according to claim 11, wherein the openable hollow fiber membrane cartridge comprises:
a body unit having a mesh unit formed at each of an upper part and a lower part thereof; and
a locking unit configured to fasten the body unit in a hinged fashion.

13. The hollow fiber membrane module according to claim 12, wherein the locking unit comprises:
a locking cover formed at one side of the body unit; and
a locking protrusion formed at the other side of the body unit so as to protrude therefrom.

14. The hollow fiber membrane module according to claim 12, wherein the locking unit comprises:
a locking cover configured to open an entire surface of one side of the body unit; and
a locking protrusion formed on the body unit so as to protrude therefrom.

15. The hollow fiber membrane module according to claim 12, wherein,
a lower surface of the body unit, both side surfaces of the body unit, and a lower side of an upper surface of the body unit are integrally formed, and
an upper side of the upper surface of the body unit is capable of being separated from one of the side surfaces of the body unit so as to open the body unit in one direction.

16. The hollow fiber membrane module according to claim 11, wherein the openable hollow fiber membrane cartridge comprises:
a body unit having a mesh unit formed at each of an upper part and a lower part thereof; and
a locking unit configured to fasten the body unit in a sliding fashion.

17. The hollow fiber membrane module according to claim 16, wherein the locking unit comprises:
a locking cover configured to slide along one side of the body unit in order to open or close the body unit; and
a sliding groove formed at the one side of the body unit such that the locking cover can slide along the sliding groove.

18. The hollow fiber membrane module according to claim 16, wherein,
the body unit is formed so as to be dividable into an upper surface and a lower surface,
one of the upper surface and the lower surface of the body unit is a locking cover configured to slide along the other surface in order to open or close the body unit, and
the other surface is provided with a sliding groove configured to allow the locking cover to slide therealong.

19. The hollow fiber membrane module according to claim 16, wherein,
a lower surface of the body unit, both side surfaces of the body unit, and a lower side of an upper surface of the body unit are integrally formed,
an upper side of the upper surface of the body unit is formed so as to be capable of being separated from the side surfaces of the body unit,
the upper side of the upper surface of the body unit is a locking cover configured to slide in order to open or close the body unit, and
the lower surface of the body unit is provided with a sliding groove configured to allow the upper side of the upper surface to slide therealong.

20. The hollow fiber membrane module according to any one of claims 12 to 19, wherein the mesh unit comprises:
a plurality of ribs configured to guide a flow direction of a fluid; and
a window formed so as to be surrounded by the plurality of ribs, and
wherein a corner curvature of each of the ribs is 0.7 or more.
